# EUROPEAN PATENT APPLICATION

(11) **EP 2 634 759 A2**
(43) Date of publication of application: **04.09.2013**
(21) Application number: 13154363.9
(22) Date of filing: 07.02.2013
(51) Int. Cl.: G09B 21/00

(54) **Electronic apparatus and function guide method thereof**

(30) Priority: 07.02.2012 JP 2012024204; 06.02.2013 JP 2013021053
(71) Applicant: YAMAHA CORPORATION, Hamamatsu-shi Shizuoka-ken 430-8650 (JP)
(72) Inventor: Suzuki, Kohei, Shizuoka-ken, 430-8650 (JP); Fukada, Atsushi, Shizuoka-ken, 430-8650 (JP)
(74) Representative: HOFFMANN EITLE

(57) **Abstract**

In an electronic apparatus having a plurality of functions, a connecting unit connects the electronic apparatus to an external device which presents text information in a form recognizable by a Visually impaired user. A function selection unit selects a function to be executed. A storage unit stores a table defining correspondence between the plurality of functions and a plurality of text files each containing text information. A text file selection unit selects a text file corresponding to the selected function with reference to the table. An acquisition unit acquires file information from the selected text file. A transmission unit transmits the acquired file information to the external device.

## Description

### BACKGROUND OF THE INVENTION

### [Technical Field of the Invention]

The present invention relates to an electronic apparatus and a function guide method thereof.

### [Description of the Related Art]

A conventional technology is known that allows visually impaired users to recognize a state of an electronic apparatus even when they cannot view a display screen of the electronic apparatus when visually impaired users use the electronic apparatus or an information apparatus.

For example, a visually impaired user is informed of a current display state or set state of an electronic apparatus through an audio guide. Audio guide techniques include a method of preparing voice corresponding to a manipulation menu in advance and generating the voice when a user manipulates a button (e.g. patent reference 1).

Furthermore, a technology called 'screen reader' by which text information (character string) currently displayed on a screen is output as a voice using voice synthesis is known (e.g. non-patent reference 1).

Moreover, an electronic apparatus is known, which transmits a character string displayed on a display to an external device such as a computer through a MIDI interface such that the character string is output as a voice using functions of the computer (e.g. non-patent reference 2).
In addition, a Braille display device and a Braille PDA (mobile terminal), which are connected to a computer or the like to output text information as Braille are known as a technology of representing information to visually impaired users as Braille instead of audio guide.

[Patent Reference 1] Japanese Patent Application Publication No. 2000-206964
[Non-Patent Reference 1] Eiich Miyazaki "The trial Production of the Novisual Web Access Using Synthetic Speech" Bull. Educ. Res. Teach. Develop. Kagawa Univ., 8: 125-133, 2004.
[Non-Patent Reference 2] "Kurzweil Display Reader", [online], 2003, KeySounds, [search on 23rd day of January, 2012], Internet <URL:http://www.keysounds.com/kdr.html>

When audio guide data is prepared in advance and used for audio guide, it is necessary to previously embed audio guide data corresponding to all manipulation menus in products. This requires costs for product development. For example, the number of development processes is increased due to audio guide data recording tasks. Furthermore, it may be necessary to perform a process for correcting recorded data whenever specifications are changed during development.

Moreover, a translation process and a recording process are needed to handle multiple languages, and thus as many processes as the number of languages are added. Furthermore, since it is necessary to embed a vast amount of audio data, a large-capacity memory is needed, increasing component costs.

While the method of performing audio guide by synthesizing a voice using text information, disclosed in non-patent reference 1, does not require a development process such as a recording process, this requires a voice synthesis engine for generating a voice in real time, and thus component costs increase.

Moreover, in the technology of previously embedding audio guide data in products, only an audio guide with respect to content determined during product design can be performed.

In products employing the technology disclosed in non-patent reference 2, it is not necessary to embed audio guide data because a character string displayed on a display panel is transmitted to an external device that performs audio guidance. In this case, however, only content displayed on the display panel can be provided through an audio guide. Furthermore, functions that are not displayed on the display panel and functions that are displayed on the display panel using images such as icons instead of characters cannot be provided through audio guidance because information about the functions cannot be transmitted to the external device.

### SUMMARY OF THE INVENTION

An object of the present invention is to provide an electronic apparatus having a guide function inexpensively.
Another object of the present invention is to provide a user-customizable guide function.

According to one aspect of the present invention, an electronic apparatus having a plurality of functions, comprises: a connecting unit that connects the electronic apparatus to an external device that has a presenting unit for presenting text information in a form desired by a user; a function selection unit that selects a function to be executed; a storage unit that stores matching information defining correspondence between the plurality of functions and a plurality of text files each containing text information; a text file selection unit that selects a text file corresponding to the function selected by the function selection unit with reference to the matching information; an acquisition unit that acquires file information from the selected text file; and a transmission unit that transmits the acquired file information to the external device connected by the connecting unit.

According to another aspect of the present invention, a guide program is executable by a computer comprising a connecting unit for connecting the computer to an electronic apparatus that has a plurality of functions and that comprises a function selection unit for selecting a function to be executed in the electronic apparatus and a transmission unit for transmitting identification information that indicates the function selected by the function selection unit, the computer further comprising a storage unit for storing matching information that defines correspondence between the plurality of functions of the electronic apparatus and a plurality of text files each containing text information, and an access unit for accessing a recording medium recording the plurality of text files defined in the matching information. The guide program is executable by the computer to perform the steps of: receiving the identification information indicating the selected function; selecting a text file corresponding to the function of the electronic apparatus identified by the received identification information, with reference to the matching information; acquiring file information of the selected text file from the recording medium; and presenting text information in a desired form based on the file information of the selected text file for assisting a user of the electronic apparatus in executing the selected function thereof.

According to the present invention, it is possible to provide an electronic apparatus having a guide function inexpensively.

Furthermore, according to the present invention, it is possible to provide a user-customizable guide function.

### BRIEF DESCRIPTION OF THE DRAWINGS

FIG. 1 is a block diagram illustrating an exemplary hardware configuration of an electronic apparatus according to an embodiment of the invention.
FIG. 2 is a block diagram illustrating a guide system according to an embodiment of the invention.
FIG. 3 is a block diagram illustrating a guide system according to a modification of the embodiment of the invention.
FIG. 4 illustrates an exemplary data configuration according to an embodiment of the present invention.
FIG. 5 is an exemplary matching table showing the relationship between text guide data and function IDs according to an embodiment of the present invention.
FIG. 6 is a plan view of a main body panel for explaining a guide function according to an embodiment of the present invention.
FIG. 7 is a flowchart illustrating a guide process according to an embodiment of the present invention.
FIG. 8 is a flowchart illustrating a file search and transmission process executed in a step shown in FIG. 7.
FIG. 9 is a flowchart illustrating a guide process performed in an information processing device 102c according to an embodiment of the present invention.

### DETAILED DESCRIPTION OF THE INVENTION

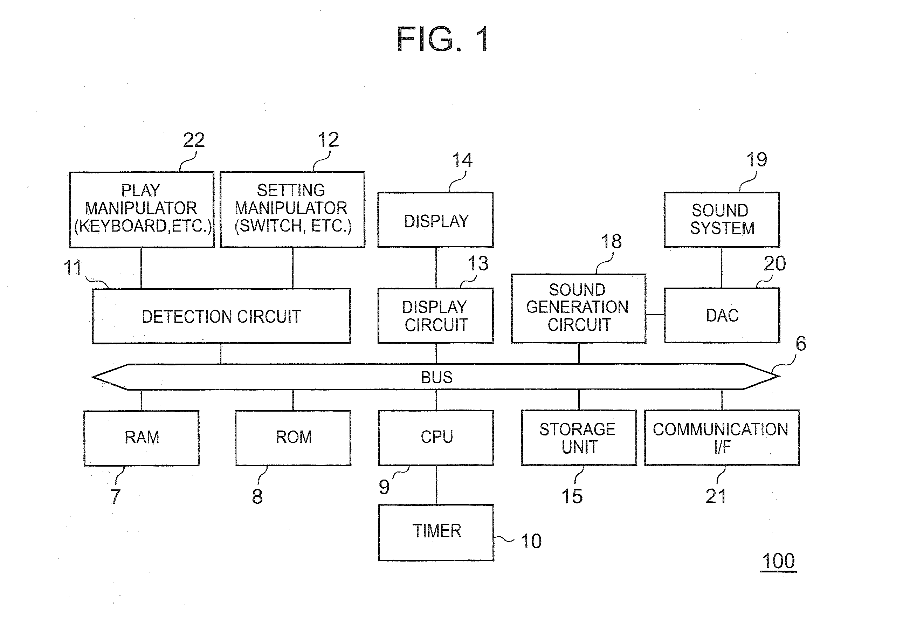

FIG. 1 is a block diagram illustrating an exemplary hardware configuration of an electronic apparatus 100 according to an embodiment of the invention.

A RAM 7, a ROM 8, a CPU 9, a detection circuit 11, a display circuit 13, a storage unit 15, a sound generation circuit 18, and a communication interface (I/F) 21 are connected to a bus 6 of the electronic apparatus (e.g., electronic musical instrument) 100.

The RAM 7 has a working area of the CPU 9, which provides a buffer area of a playback buffer or the like, a flag, a register, various parameters, etc.

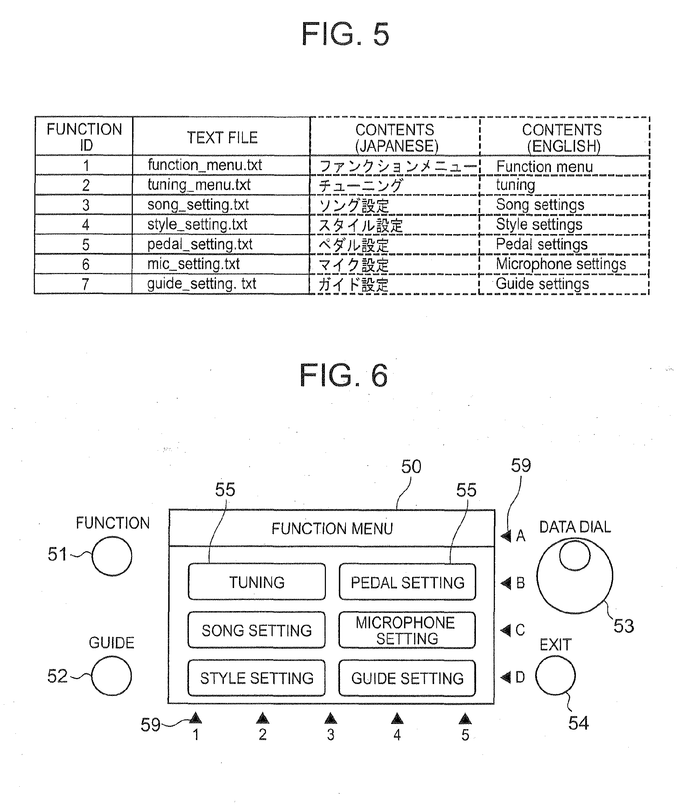

The ROM 8 stores a variety of data files such as waveform data, automatic playback data, automatic accompaniment data (play style data) and the like, parameters, a control program, or a function guide program for implementing the present embodiment, a matching table used to execute a guide function, shown in FIG. 5, etc.

The CPU 9 performs computation or device control according to the control program stored in the ROM 8 or the storage unit 15 and according to a program for implementing the present embodiment. A timer 10 is connected to the CPU 9, and a basic clock signal, interruption timing, etc. are provided to the CPU 9.

A user can perform input, setting and selection using a setting manipulator 12 connected to the detection circuit 11. For example, the setting manipulator 12 can be any device that can output a signal corresponding to user input, such as a switch, a pad, a fader, a slider, a rotary encoder, a joystick, jog & shuttle, a keyboard for inputting characters, a mouse, etc. Furthermore, the setting manipulator 12 may be a soft switch displayed on a display 14, which is manipulated using a different manipulator such as a cursor switch. In the present embodiment of the invention, a touch panel is used as a function selection unit (setting manipulator 12) in addition to physical switches arranged on the main body panel.

The touch panel is a manipulator that senses a touch operation of the user, which is applied to a touch panel manipulation plane provided to the surface of the display 14, and outputs position information (e.g., xy coordinates) of a touched point. In the present embodiment of the invention, the touch panel is used as the setting manipulator 12 and the position information output from the touch panel determines a command to be executed by the electronic apparatus 100. Matching of the position information and the command depends
on information displayed on the display 14. In the present embodiment of the invention, the touch panel manipulation plane and the display 14 are combined and called a touch panel.

The display circuit 13 is connected to the display 14 and can visually present information on the display 14. The display 14 can visually present various types of information for setting and operating the electronic apparatus 100.

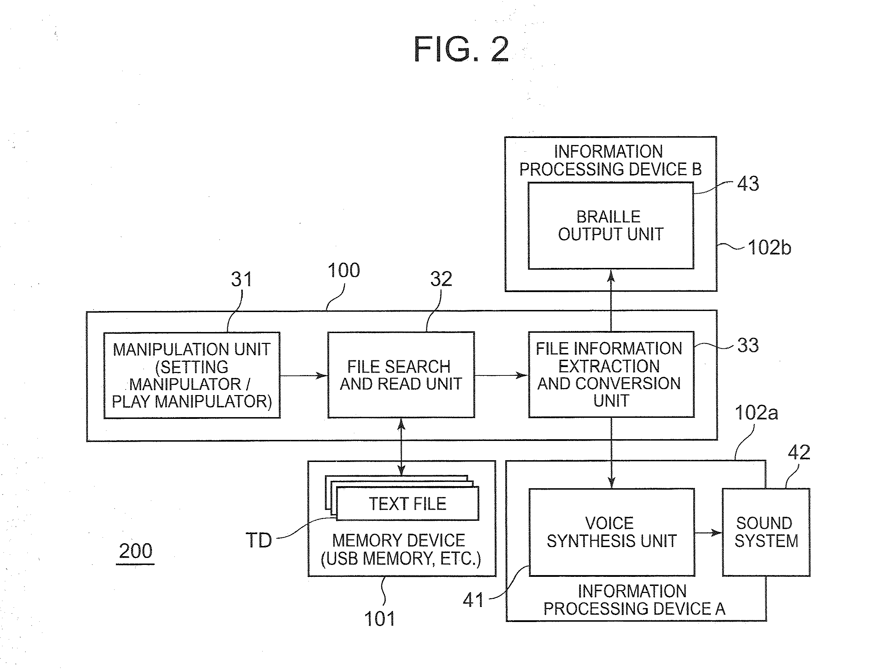

The storage unit 15 is composed of a combination of a recording medium and a driver thereof. The recording medium is selected from at least one of recording media, such as a hard disk, FD (flexible disk or floppy disk (registered trade mark)), CD (compact disk), DVD (digital versatile disk), and a semiconductor memory such as a flash memory and the like. The driver is provided for driving the recording media. A recording medium preferably includes an area rewritable by the user in order to add text guide data to the recording medium. The recording medium is preferably detachable.
The storage unit 15 stores text guide data TD (shown in FIG. 2), which is provided by the manufacturer of the electronic apparatus 100 or a third party or is generated by the user, and also other data including audio data, preferably, a plurality of automatic playback data and automatic accompaniment data (accompaniment style data), etc.

The sound generation circuit 18 generates a music signal according to the text guide data TD, audio data, automatic accompaniment data or automatic play data stored in the storage unit 15, ROM 8 or RAM 7, and according to a play signal, a MIDI signal, phrase waveform data or the like, provided by an external musical instrument connected to a play manipulator (keyboard) 22 or the communication interface 21, then adds various musical effects to the music signal, and provides the resultant music signal to a sound system 19 via a DAC 20. The DAC 20 converts the music signal in a digital format into an analog signal. The sound system 19 includes an amplifier and a speaker and outputs the digital-to-analog-converted music signal as sound.

The communication interface 21 is composed of at least one of a general-purpose short-range wired I/F such as USB and IEEE 1394, a communication interface such as a general-purpose network I/F, for example, Ethernet (registered trademark), a general-purpose I/F such as a MIDI I/F, a communication interface such as general-purpose short-range wireless I/F, for example, wireless LAN and Bluetooth (registered trademark), and a wireless communication interface for music only, and can communicate with an external device, a server, etc.

The play manipulator (keyboard) 22 is connected to the detection circuit 11 and provides play information (play data) according to a playing operation of the user. The play manipulator 22 is a manipulator through which the user plays the electronic musical instrument. Start timing and end timing of manipulation of the user, applied to the manipulator, are input to the play manipulator 22 as a key-on signal and a key-off signal, respectively, at a pitch corresponding to a key manipulated by the user. Furthermore, it is possible to input various parameters such as a velocity according to playing manipulation of the user to the play manipulator 22.

The electronic apparatus according to the present embodiment may be a musical instrument having no play manipulator or an electronic apparatus other than the musical instrument. In this case, the play manipulator 22 is omitted. Furthermore, the display 14 and the sound system 19 may be replaced by detachable external units and other components may be appropriately added or omitted.

FIG. 2 is a block diagram of a guide system 200 according to an embodiment of the invention. In the specification, 'guide' includes guide forms that are recognizable by visually impaired users, such as audio guide for providing a character string as a voice, Braille guide for providing a character string as Braille, drawing according to unevenness, vibration, etc.

The guide system 200 according to the embodiment of the present invention includes the electronic apparatus 100, a memory device 101 readable from the electronic apparatus 100, and one of information processing devices 102a and 102b connected to the electronic apparatus 100.

For example, the electronic apparatus 100 corresponds to the electronic apparatus 100 shown in FIG. 1 and includes a manipulation unit 31, a file search and read unit 32 and a file information extraction and conversion unit 33.

The manipulation unit (function selection unit) 31 corresponds to the play manipulator 22 and the setting manipulator 12 shown in FIG. 1 and receives an input manipulation of the user. The setting manipulator 12 includes a touch panel composed of the display 14 (shown in FIG. 1) and the touch manipulation plane provided to the screen of the display 14, as described above.

The user selects various functions using the setting manipulator 12. Here, a selected function may be any function executed in the electronic apparatus 100, such as a function of switching to a predetermined mode, a function of selecting a predetermined parameter, a function of setting or changing a parameter value, a function of reproducing automatic playback data and automatic accompaniment data and interrupting reproduction of the automatic playback data and automatic accompaniment data, a function of switching or changing a display screen, a guide on/off function, a function of setting and changing the guide function, etc. The manipulation unit 31 as the function selection unit may be a soft switch manipulated by a mouse or a joystick connected to the electronic apparatus 100 as well as a physical switch provided to the touch panel or the main body panel. Otherwise, the play manipulator 22 can be used as the function selection unit.

The file search and read unit 32 is composed of the CPU 9 of FIG. 1, for example. The file search and read unit 32 reads the text guide data TD composed of a plurality of text files from the memory device 101 according to a manipulation applied through the manipulation unit 31 and transmits the read text guide data TD to the file information extraction and conversion unit 33. The text guide data TD is searched and read in such a manner that text guide data TD corresponding to a function ID matched to a manipulation applied to the manipulation unit 31 is specified according to the matching table shown in FIG. 5, for example, and the memory device 101 is searched for the specified text file and the text file is read.

The file information extraction and conversion unit 33 extracts file information (character string, path information, etc.) from the text guide data TD (precisely a text file) read by the file search and read unit 32 from the memory device 101 or converts the text guide data TD into a format (format for Braille display or the like) that can be processed by the information processing devices 102a and 102b. Then, the file information extraction and conversion unit 33 transmits the extracted file information or the converted text guide data TD to the information processing devices 102a and 102b through the communication I/F 21. According to processing capability of the information processing devices, the text guide data TD can be transmitted to the information processing devices without being converted. When path information of the text guide data TD is transmitted as the file information, the information processing device 102a or 102b (hereafter, collectively 'information processing device 102') that has received the path information reads the text guide data TD with reference to the path information.

The memory device 101 is composed of an external memory corresponding to the storage unit 15 of FIG. 1, implemented as an external device. Specifically, the memory device 101 is preferably composed of a semiconductor memory such as a USB memory or a detachable recording medium such as a CD-ROM, DVD-ROM, etc. and stores the text guide data TD (text file).

The recording medium used as the memory device 101 may be provided by the manufacturer of the electronic apparatus 100 or a third party, or provided by the user. Data stored in the recording medium may also be provided by the manufacturer of the electronic apparatus 100 or a third party, or provided by the user.

The text guide data TD is data about selection and setting of functions, setting and parameters of the electronic apparatus 100, a display state, a current value, etc., which is recorded in the form of character strings. For example, the text guide data TD is generated in a known text format, e.g., TXT format.

The memory device 101 is not limited to a detachable element and may be integrated into the electronic apparatus 100. In this case, data stored in the memory device 101 can be updated by transmitting the text guide data TD from an external device (a personal computer or a server) through a communication network. Otherwise, it is possible to directly connect a keyboard for inputting characters to the electronic apparatus 100 and update the text guide data TD using the keyboard. Alternatively, the memory device 101 may be set in another electronic musical instrument or a computer such as a server, connected via a network such as the Internet or a LAN.

The information processing device 102a includes a voice synthesis unit 41 and a sound system 42 capable of outputting a voice synthesized by the voice synthesis unit 41. The sound system 42 may be connected to the voice synthesis unit 41 as well as being included in the voice synthesis unit 41. The voice synthesis unit 41 includes a voice synthesis engine that can convert a character string included in file information (character strings) transmitted from the electronic apparatus 100 into a voice. When the file information transmitted from the electronic apparatus 100 is path information, the voice synthesis unit 41 reads text guide data TD according to a path designated by the path information, extracts a character string corresponding to the contents of the text guide data TD and converts the character string into voice. When the text guide data TD is transmitted from the electronic apparatus 100, the voice synthesis unit 41 extracts the character string corresponding to the contents of the guide text data TD and converts the character string into a voice. The information processing device 102a can be configured as any form of device such as a personal computer, mobile terminal, other electronic apparatuses, etc. if the apparatus includes at least the voice synthesis unit 41 and can output a synthesized voice.

The sound system 42 amplifies a voice signal synthesized by the voice synthesis unit 41 and outputs the voice signal as a voice sound. It is possible to input the voice signal synthesized by the voice synthesis unit 41 to the electronic apparatus 100 such that the sound system 19 (shown in FIG. 1) of the electronic apparatus 100 outputs a synthesized voice.

The information processing device 102b includes a Braille output unit 43 that converts a character string included in file information (character strings) transmitted from the electronic apparatus 100 into Braille and outputs the Braille. When path information of text guide data TD or the text guide data TD itself is transmitted from the electronic apparatus 100, it is necessary for the information processing device 102b to have a function of reading the text guide data TD according to a path designated by the path information and a function of extracting a character string corresponding to the contents of the guide text data TD. For example, the information processing device 102b is a personal computer or a mobile terminal including a Braille display that can convert a character string into Braille.

While the information processing devices 102a and 102b are separate units in the above description, a composite device including both the voice synthesis unit 41 (and the sound system 42) and the Braille output unit 43 may be used as the information processing device 102.

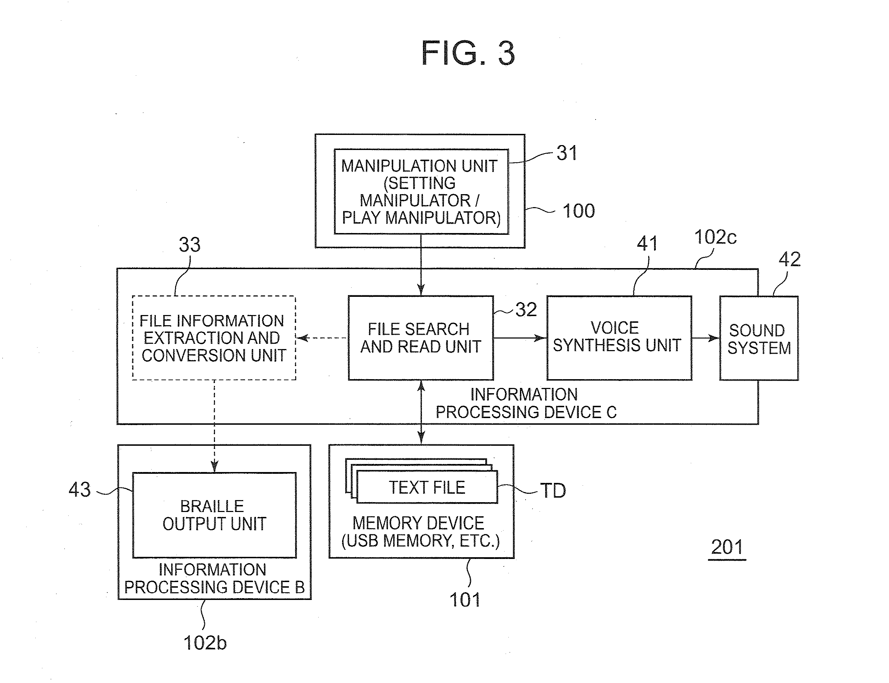

FIG. 3 is a block diagram illustrating a guide system 201 according to a modification of the embodiment of the present invention. While the electronic apparatus 100 includes the manipulation unit 31, the file search and read unit 32, and the file information extraction and conversion unit 33 and the memory device 101 is connected to the electronic apparatus 100 in the guide system 200 shown in FIG. 2, the electronic apparatus 100 shown in FIG. 3 may use only the manipulation unit 31 and the information processing device 102c may include the file search and read unit 32 (and the file information extraction and conversion unit 33), the voice synthesis unit 41 and the sound system 42. The information processing device 102c includes at least a communication I/F of a personal computer or a mobile terminal and can read a file from the memory device 101. The memory device 101 is connected to the information processing device 102c instead of the electronic apparatus 100.

In this case, the information processing device 102c is instructed to read one text file from text guide data TD corresponding to the manipulation indicated by identification information through the file search and read unit 32 from the memory device 101 and to transmit the text guide data TD to the voice synthesis unit 41. The identification information that indicates a manipulation performed through the manipulation unit 31 of the electronic apparatus 100 is transmitted to the information processing device 102c through the communication I/F 21. To search for the text guide data TD for a target text file, the information processing device 102c accesses the matching table of functions and text data TD, stored in the ROM 8 of the electronic apparatus 100. Alternatively, the matching table may be stored in an internal storage region of the information processing device 102c and the internal storage region may be searched for the text guide data TD. The voice synthesis unit 41 converts a character string corresponding to the contents of the text guide data TD read by the file search and read unit 32 into a voice and outputs the voice to the sound system 42 such that the sound system 42 outputs the voice.

The information processing device 102b including the Braille output unit 43 may be connected to the information processing device 102c and used. In this case, the information processing device 102c includes the file information extraction and conversion unit 33 as shown in FIG. 3 and the information processing device 102b converts the text guide data TD into a file format capable of being converted into Braille and transmits the converted text guide data TD to the information processing device 102b.

As described above, since the electronic apparatus 100 uses only the manipulation unit 31 and the file search and read unit 32 (and the file information extraction and conversion unit 33) are provided to the information processing device 102c, it is possible to obtain the same effect as that of the guide system 200 of FIG. 2 while reducing the number of processes performed by the electronic apparatus 100.

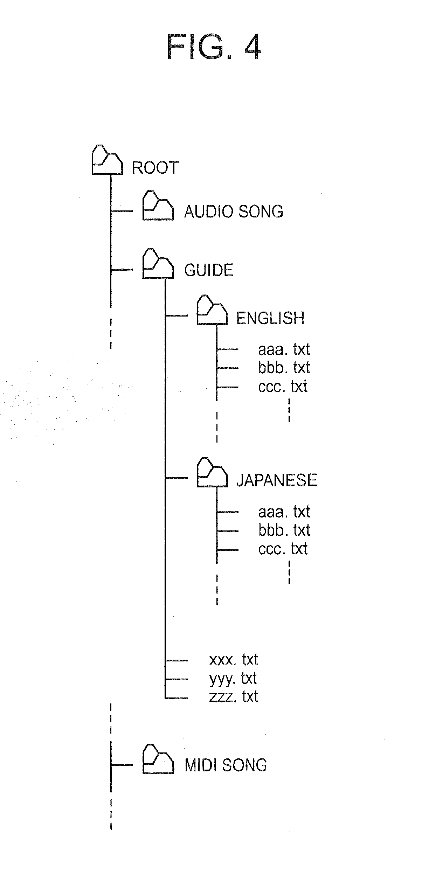

FIG. 4 illustrates an exemplary data configuration according to an embodiment of the present invention. Various types of data in a hierarchical structure as shown in FIG. 4, for example, is stored in the memory device 101 shown in FIGS. 2 and 3.

In the present embodiment of the invention, text data in a GUIDE folder (folder for guide) is recognized as text guide data TD and becomes a target to be converted into voice or Braille. Accordingly, the text guide data TD is stored in the GUIDE folder under a ROOT folder.

The user locates self-created or acquired text guide data TD right under the GUIDE folder (e.g. in a file 'xxx.txt' shown in FIG. 4) or creates a language folder such as 'JAPANESE' or 'ENGLISH' in the GUIDE folder and stores the text guide data TD in the created language folder (e.g. a file 'aaa.txt' shown in FIG. 4).

The electronic apparatus 100 according to the present embodiment of the invention has a language setting function for setting a language of a menu or a message displayed on the screen of the display 14 (shown in FIG. 1), and thus a desired language of the user can be set from among a plurality of languages such as 'Japanese', 'English', etc. Here, a search target folder is changed according to the set language when the memory device 101 (shown in FIGS. 2 and 3) is searched for the text guide data TD.

It is preferable to determine a folder name that can be used for a language folder on the basis of the language setting function of the electronic apparatus 100. For example, if 'Japanese', 'English', 'German', 'French' and 'Italian' can be set as languages of the electronic apparatus 100, labels 'JAPANESE', 'ENGLISH', 'GERMAN', 'FRENCH' and 'ITALIAN' can be used as language folder names. However, language folder names are not limited thereto and the user may freely set the language folder names. In this case, information for representing a language folder and a language corresponding to the language folder is needed.

When a manipulation of the user, which requires the guide function, is detected through the electronic apparatus 100, a file name of read text guide data TD according to the manipulation is determined with reference to the table shown in FIG. 5, which will be described below. Here, a folder that is searched for a text file corresponding to the determined file name is decided on the basis of a set language of the electronic apparatus 100 when the manipulation is performed. For example, if the language is set to 'JAPANESE', when the manipulation requiring the guide function is performed, 'drive: /GUIDE/JAPANESE)' is searched for text guide data TD (e.g. a text file identified by bbb.txt) corresponding to the manipulation. When the file 'bbb.txt' is detected, this file is read.

The same file name is assigned to text guide data TD corresponding to the same function, parameter, command, or display screen and the text guide data TD assigned the same file name is stored in different language folders, such that a guide function corresponding to a set language is executed with reference to language setting of the electronic apparatus 100.

A folder other than the guide folder (GUIDE folder) may be present in the ROOT folder of the memory device 101 of FIGS. 2 and 3. For example, an AUDIO SONG folder that stores audio data and a MIDI SONG folder that stores automatic playback data or accompaniment style data in a MIDI format can be present.

FIG. 5 is an exemplary matching table showing the relationship between a plurality of text guide data TD and a plurality of function IDs according to an embodiment of the present invention.

In the table that matches respective text guide data TD to respective function IDs, function IDs and text file names (file names of text guide data TD) corresponding to the function IDs are defined. While contents (character strings) of text files are not defined in the matching table, FIG. 5 shows contents created in Japanese and English, which correspond to text files respectively matched to the function IDs, as an example. The user or the manufacturer of the electronic apparatus 100 can generate text files having the contents and attach file names defined in the matching table to the created text files so as to use the text files as text guide data TD. A function ID is allocated to a manipulation that indicates a command for executing a function that requires guidance from among functions of the electronic apparatus 100, which is selected by the manipulation unit (function selection unit) 31 shown in FIGS. 2 and 3 (hereinafter, the manipulation is simply referred to as 'guide manipulation' or 'manipulation assigned a function ID').

When the user manipulates the electronic apparatus 100, it is determined whether a function ID is allocated to the manipulation and, when a function ID is allocated to the manipulation, a text file name corresponding to the function ID is acquired with reference to the matching table.

As described above, the present embodiment of the invention allocates a function ID to each manipulation that requires guidance and specifies the name of text guide data TD corresponding to the function ID. Accordingly, it is possible to use a text file created by the user or a text file obtained after the electronic apparatus is acquired as text guide data TD by storing text data in the file name corresponding to the function ID under the GUIDE folder or in a language folder corresponding to the language of the text file. Therefore, it is possible to provide text guide data TD customized for each user by recording the text guide data TD in a recording medium and distributing the recorded text guide data TD or downloading the text guide data TD from a site on the Internet. When a technical term is difficult to recognize, for example, it is possible to provide text guide data TD corresponding to an easy word converted from the technical term. Furthermore, for a user who uses a language different from the language used in the electronic apparatus, text guide data TD created in the language of the user can be provided. Therefore, addition and update of text guide data TD can be easily performed.

FIG. 6 is a plan view of part of the main body panel of the electronic apparatus 100 for explaining the guide function according to an embodiment of the present invention.

The main body panel of the electronic apparatus 100 according to the present embodiment includes at least the display 14 (shown in FIG. 1), preferably, a touch panel 50 arranged thereon. The setting manipulator 12 (a function button 51, a guide button 52, a parameter change dial 53, and an EXIT button 54) including various physical switches, dials, etc. is arranged around the touch panel 50.

The function button (FUNCTION) 51 is a button to which a command for switching to a function menu display screen shown in FIG. 6 when the user presses this button is allocated.

The guide button 52 is a button to which a command for transmitting only text guide data is allocated. In the present embodiment, if the user manipulates a specific button on the panel or display on the touch panel when the guide function of the electronic apparatus 100 is on, a function corresponding to the manipulation is executed and, at the same time, text guide data TD corresponding to the manipulation is read and reproduced. However, when the user manipulates another button or display on the touch panel while pressing the guide button 52, the function corresponding to the manipulation is not executed and the text guide data TD corresponding to the manipulation is read and transmitted to the information processing device 102 connected to the electronic apparatus 100.
A button (guide instruction means) for instructing only text guide data to be transmitted need not be a dedicated physical button such as the guide button 52 shown in FIG. 6. For example, the guide instruction function may be allocated to an assignable switch or pedal that can be assigned to an arbitrary function. Alternatively, it is possible to use a button that is not frequently used (e.g. a demonstration button for performing a demonstration) as the guide instruction means only when the guide function is on.

When the touch panel 50 is used, information about touch points on the touch panel 50, which respectively correspond to different functions, is stored as contents of text guide data TD such that the information can be useful to visually impaired users when they use the touch panel 50. In this case, scale marks 59 in the form of a depression or a protrusion, which can be recognized by visually impaired users by touch, may be arranged around the touch panel 50 and described in a text file (e.g., 'function_memu.txt' of FIG. 5) such that guide of '2B tuning, 2C song setting, etc.' is performed and corresponding touch manipulation can be performed according to scale marks 59.

The parameter change dial 53 can be turned left or right to increase or decrease a parameter value. The EXIT button 54 is a button to which a command for returning to the previous screen before the current screen or a screen of a higher layer is allocated.

Function IDs respectively indicating functions corresponding to elements of the manipulator 12 or regions on the touch panel, to which commands for executing functions with the guide function are allocated, are respectively matched to elements of the manipulator 12 or regions on the touch panel. As described with reference to FIG. 5, each text guide data TD is matched to each function ID.

It is assumed that the guide function of the electronic apparatus 100 is turned on in advance.

In the example of FIG. 6, a function menu is displayed on the touch panel 50, and a plurality of buttons to which commands for switching to various function setting screens are allocated is arranged in the function menu. In this example, the plurality of buttons 55 includes a button for switching to a tuning setting screen, a button for switching to a song setting screen, a button 55 for switching to a style setting screen, a button for switching to a pedal setting screen, a button for switching to a microphone setting screen, and a button for switching to a guide setting screen. The function IDs 1 to 7 of the table shown in FIG. 5 are respectively allocated to the function button 51 and the setting buttons 55.

When the user pushes the guide setting button 55 while pressing the guide button 52 under the condition where the guide function is turned on, 'guide_setting.txt' is read with reference to the matching table of FIG. 5 and transmitted to the information processing device 102 such that the information processing device 102 converts the transmitted file into voice or Braille. At this time, the command for switching to the guide setting menu, which is assigned to the guide setting button 55, is not executed and screen display shown in FIG. 6 is not changed. When the guide button 52 is released and the guide setting button 55 is pressed, the command for switching to the guide setting menu is executed and display on the touch panel 50 switches to the guide setting menu (not shown).

When the user pushes the function button 51 while pressing the guide button 52, 'function_menu.txt' is read with reference to the matching table of FIG. 5 and transmitted to the information processing device 102 such that the information processing device 102 converts a character string 'function menu' into a voice or Braille.

In this case, contents of 'function_menu.txt' may include contents of setting items included in the function menu screen. For example, if the screen shown in FIG. 6 is used as the function menu screen, the contents of 'function_menu.txt' may include 'function menu, tuning, song setting, style setting, pedal setting, microphone setting, and guide setting'. Accordingly, the user can be aware of not only the button they pressed but also how the contents of the screen are changed according to user manipulation.

The matching table of FIG. 5 may be defined such that text guide data TD corresponding to 'tuning, song setting, style setting, pedal setting, microphone setting, and guide setting' are sequentially read after 'function menu' is read without changing the contents of 'function_menu.txt'. That is, a function ID corresponding to a manipulation of the function button is set to 'a', a function ID corresponding to function menu screen display is set to 'b', and text guide data TD corresponding to both the function IDs 'a' and 'b' are sequentially read when the function menu button is pressed. In this manner, it is possible to switch of reading of the contents of the screen ON and OFF in response to whether the text guide data corresponding to the function ID 'b' is provided or not. Furthermore, it is possible to provide the same text guide data TD (text data corresponding to the function ID 'b') even for different manipulations in a case in which the function button 51 is pressed to display the function menu and a case in which the EXIT button 54 is pressed to re-display the function menu. Accordingly, guidance can be easily customized according to situations even in a complicated manipulation system.

In the present embodiment of the invention, as described above, it is possible to transmit only text guide data without executing a function corresponding to a manipulation by performing the manipulation while pressing the guide button 52 when the guide function is turned on. Accordingly, it is possible to confirm a function or a parameter allocated to a manipulator through a voice or Braille and then easily execute the function or set the parameter.

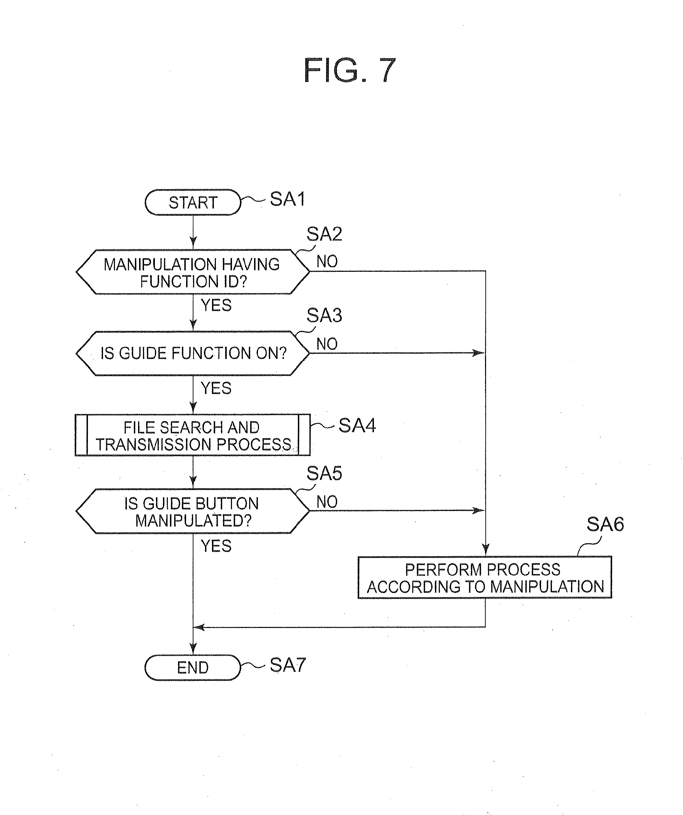

FIG. 7 is a flowchart illustrating a guide process according to an embodiment of the present invention. This guide process is performed by the CPU 9 of the electronic apparatus 100 shown in FIG. 1 and initiated upon detection of manipulation through the manipulation unit 31 (shown in FIG. 2).

The guide process is initiated in step SA1, and it is determined whether a manipulation that causes the guide process is a manipulation to which a function ID is allocated (manipulation that requires guidance) in step SA2. Here, a manipulation to which a function ID is allocated refers to a manipulation for which guidance is performed when a function ID is allocated to a command executed according to the manipulation while the guide function is on, as described above. For example, a function ID is not allocated to a playing operation, such as a manipulation of a key (play manipulator 22) or a pedal, because the playing operation does not require any guidance. Furthermore, in the case of a manipulation of changing a tempo of automatic accompaniment data, a user can clearly recognize the tempo change by listening, and thus the manipulation can be performed without guidance. Accordingly, a function ID may not be allocated to such a type of manipulation. Guidance is needed when setting screens are displayed and setting is changed and checked, and thus function IDs are added to these manipulations (commands corresponding thereto). When the manipulation corresponds to a manipulation to which a function ID is allocated in step SA2, the process flow proceeds to step SA3 indicated by an arrow YES. If the manipulation is not a manipulation to which a function ID is allocated, the process flow proceeds to step SA6 indicated by an arrow NO without performing guidance, then performs a process according to the manipulation, and thereafter proceeds to step SA7 to end the guide process.

In step SA3, it is determined whether the guide function is on. When the guide function is on, the process flow proceeds to step SA4 indicated by an arrow YES. If the guide function is off, the process flow proceeds to step SA6 indicated by an arrow NO without performing guidance, then carries out a process according to the corresponding manipulation, and thereafter proceeds to step SA7 to end the guide process.

A file search and transmission process is performed in step SA4. In the file search and transmission process, the memory device 101 (shown in FIG. 2) is searched for text guide data TD corresponding to the function ID allocated to the manipulation that causes this guide process, the text guide data TD is read, and contents (character string, path information, file itself, etc.) of the text guide data TD is transmitted to the information processing device 102 (shown in FIGS. 2 and 3). Then, the process flow proceeds to step SA5.
In step SA5, it is determined whether a guide button (e.g. the guide button 52 shown in FIG. 6) for instructing only a guidance to be performed is manipulated (pressed) or not. When the guide button is manipulated, the process flow proceeds to step SA7 indicated by an arrow YES to end the guide process. When the guide button is not manipulated, the process flow proceeds to step SA6 indicated by an arrow NO, carries out a process (command) allocated to the manipulation that causes this guide process, and then proceeds to step SA7 to end the guide process.
The process for determining whether to execute a function corresponding to a manipulation, such as step SA5, may be performed not only through a method using a dedicated guide instruction button but also through a process (A) of reading and transmitting text guide data TD without executing a function corresponding to a manipulation having a function ID when the manipulation is performed once and, when the same manipulation is performed one more time within a predetermined time, executing the function corresponding to the manipulation, or a process (B) of only reading and transmitting text guide data TD without executing a function corresponding to a manipulation having a function ID when the manipulation is rapidly performed twice (e.g. a manipulation such as double clicking (rapidly pressing a button twice)) and executing the function corresponding to the manipulation when the manipulation is performed once at normal speed.
In a case in which any of the above methods is used, at least two types of manipulation modes are preferably defined for the manipulation unit 31 shown in FIG. 2, a function corresponding to a manipulation is not executed and only guidance is performed in the first manipulation mode (e.g. a manipulation performed while pressing the guide button 52), whereas the function corresponding to the manipulation is executed in the second manipulation mode (e.g. a manipulation without pressing the guide button 52). While a text file is read and transmitted (SA4) and the function is executed (SA6) in the second manipulation mode (YES in step SA5) in the case of the flow shown in FIG. 7, it may be possible to execute only the function without performing guidance in the second manipulation mode.

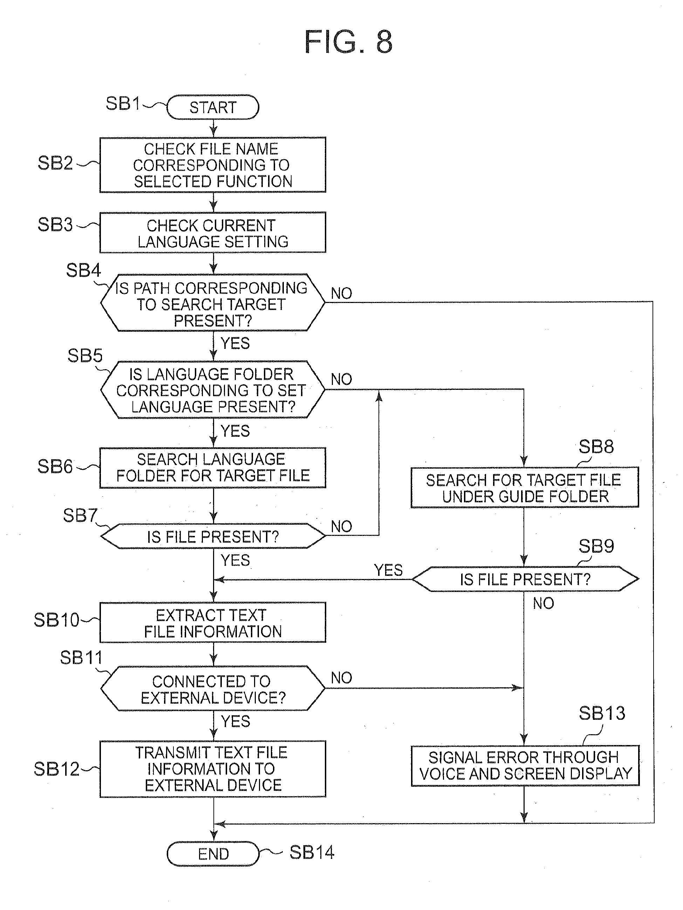

FIG. 8 is a flowchart illustrating a file search and transmission process performed in step SA5 of FIG. 7.

The file search and transmission process is initiated in step SB1, and a file name of text guide data TD corresponding to the manipulation that causes the guide process of FIG. 7 to be performed is checked (acquired) with reference to the matching table shown in FIG. 5, for example, in step SB2.

Current language setting of the electronic apparatus 100 is checked (acquired) in step SB3. Then, it is checked whether there is a path to a search target for a text guide file in step SB4. For example, drive D: (a storage region connected to a communication I/F, such as a USB) is set as a search target in advance and recorded in the ROM 8 (which cannot be changed by the user). In this case, when a USB memory is connected to drive D:, the USB memory is searched. If an SD card reader is connected through USB, an SD card is searched. Otherwise, a search target may be defined in the table of FIG. 5. For example, a corresponding file name may be defined in terms of the path such that 'D:/Guide/aaa.txt' is searched for each function ID. In another embodiment, the source of the text guide files is provisionally located in a server as a search target, which is connectable to the electronic apparatus 100 through a network such as Internet or LAN. In this case, the path of the search target is provided in the form of an address of the server such as URL. The electronic apparatus 100 checks the address (URL) to determine whether the server is accessible or not over the network. When the path corresponding to a search target exists, the process flow proceeds to step SB4 indicated by an arrow YES. If the path does not exist, the process flow proceeds to step SB14 indicated by an arrow NO, ends the file search and transmission process and returns to the guide process of FIG. 7. Alternatively, when the path is not present, the process flow may proceed to step SB13 instead of step SB14, signal an error through a voice and screen display, and then proceed to step SB14.
In step SB5, the path found in step SB4 is searched for a language folder (matching language folder) corresponding to the set language checked in step SB3. For example, when 'Japanese' is set as a language, a 'Japanese' folder under the 'GUIDE' folder of FIG. 4 is searched. When the matching language folder is found, the process flow proceeds to step SB6 indicated by an arrow YES. If the matching language folder is not found, the process flow proceeds to step SB8 indicated by an arrow NO.

In step SB6, the matching language folder detected in step SB4 is searched for text guide data TD (target file) (corresponding to the manipulation that causes the guide process of FIG. 7 to be initiated) of a target to be read and transmitted as a guide.

In step SB7, it is determined whether the target file is detected in step SB6. When the target file is detected, the process flow proceeds to step SB10 indicated by an arrow YES. If the target file is not detected, the process flow proceeds to step SB8 indicated by an arrow NO.

When the text guide data TD according to the language folder corresponding to the language checked at step SB3 or the corresponding language has not been detected, the target file is detected from the folder right under the guide folder (e.g. GUIDE folder of FIG. 4) in step SB8. The target file detected in step SB8 is text guide data TD for which a specific language is not set. The target file can be data in English, Japanese, or other languages.

In step SB9, it is determined whether the target file is detected in step SB8. When the target file is detected, the process flow proceeds to step SB10 indicated by an arrow YES. If the target file is not detected, the process flow proceeds to step SB13 indicated by an arrow NO.

In step SB10, the file information extraction and conversion unit 33 shown in FIG. 2 reads the target file (text guide data TD), extracted in step SB6 or SB8, from the memory device 101 and extracts file information (character strings, path information, etc.) of the target file or converts the text guide data TD into a format (format for Braille display or the like) that can be processed in the information processing devices 102a and 102b of FIG. 2, for example. It is also possible to transmit the text guide data TD without change. Furthermore, path information of the text guide data TD may be transmitted as the file information. In this case, the information processing device 102 reads the text guide data TD with reference to the path information upon receiving the path information.

In step SB11, it is determined whether an external device (e.g., the information processing devices 102a to 102c) is connected to the electronic apparatus 100. When the external device is connected to the electronic apparatus 100, the process flow proceeds to step SB12 indicated by an arrow YES. When the external device is not connected to the electronic apparatus 100, the process flow proceeds to step SB13 indicated by an arrow NO.

In step SB12, the file information extracted in step SB10 or the text guide data TD converted in step SB10 is transmitted to the external device determined to be connected to the electronic apparatus 100 in step SB11 through the communication I/F, for example. Then, the process flow proceeds to step SB14 to end the file search and transmission process and returns to the guide process of FIG. 7.

An error is signaled through a voice and screen display in step SB13. Then, the process flow proceeds to step SB14 to end the file search and transmission process and returns to the guide process of FIG. 7. For example, signaling the error through a voice is performed in such a manner that speech 'No file present' or 'external device is not connected', or a warning sound representing the error is output. In this case, it is desirable to store the voice or sound in the ROM 8 shown in FIG. 1 in advance. When the target file is not found, the process flow may proceed to step S14 without generating an error message (omitting step SB13). Otherwise, the file name of a text file that needs to be played is signaled through voice such that the user creates the text file. Furthermore, it may be possible to output stored speech 'There is no text file. Do you wish to create one?', automatically switch the current state to a creation mode when the user agrees, and generate the text guide data TD.

While the file search and transmission process is ended when the path corresponding to a search target is not present (NO in step SB4) in the above-described example, the process flow may proceed to step SB13 after step SB4 to inform the user that there is no path.

In the above-described example, when the target file is not present in the search target folder, a folder of a layer immediately above the corresponding layer is searched. However, other places (e.g. a further higher layer, a lower layer, a different drive, a network such as the Internet and LAN, etc.) may be searched for the target file. In this case, default text guide data TD is previously stored on a website of the manufacturer of the electronic apparatus 100 such that guide can be performed while successfully detecting the target file when the electronic apparatus 100 is connected to the network.

Moreover, when the file name is input slightly differently (due to a difference between an upper case and a lower case, a difference between an em and an en quad, only one different character in a file name, etc.), it may be determined that the file name corresponds to the target file.

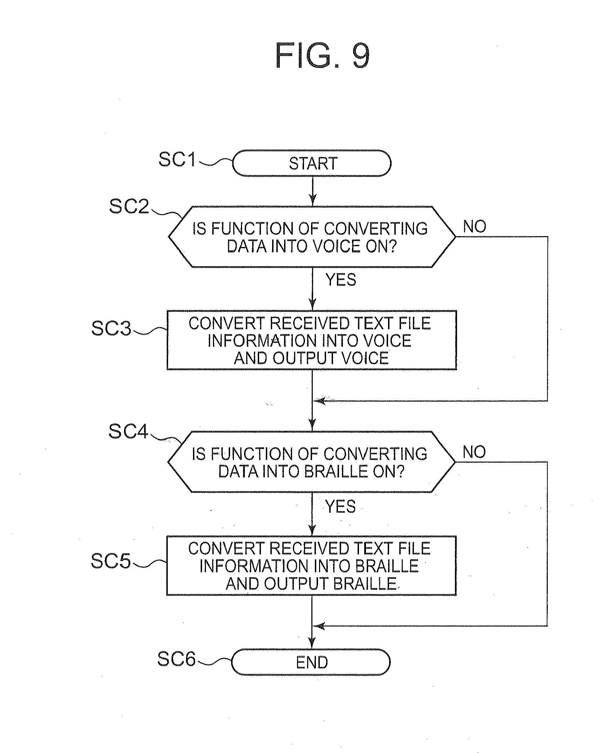

FIG. 9 is a flowchart illustrating the guide process performed in the information processing device 102c according to an embodiment of the present invention. This guide process is performed by the CPU of the information processing device 102c shown in FIG. 3. For example, the guide process is initiated when the file information transmitted from the electronic apparatus 100 in step SB12 of FIG. 8 is received. In the case of the information processing device 102a shown in FIG. 2, step SC4 in the following process is omitted. In the case of the information processing device 102b, steps SC2 and SC3 in the following process are omitted.

The guide process is initiated in step SC1, and it is determined whether a function of converting data into a voice is on in step SC2. When the function of converting text data into a voice is on, the process flow proceeds to step SC3 indicated by an arrow YES. In other cases, the process flow proceeds to step SC4.

In step SC3, a character string is converted into a voice on the basis of the file information transmitted from the electronic apparatus 100 in step SB12 of FIG. 8 and received by the information processing device 102c. The character string is converted into a voice according to a known technology. When the file information corresponds to path information, the target file is read on the basis of the path information, and the character string is extracted as necessary and converted into a voice. When the text guide data TD is directly transmitted, the character string is extracted as necessary and converted into a voice.

In step SC4, it is determined whether a function of converting data into Braille is on. The process flow proceeds to step SC5 indicated by an arrow YES when the function of converting data into Braille is on and proceeds to step SC6 indicated by an arrow NO in other cases to end the guide process.

In step SC5, a string of characters is converted into Braille based on the file information transmitted by the electronic apparatus 100 at step SB12 of FIG. 8 and received by the information processing device 102c. The conversion of the string of characters into Braille is performed by a conventional technology. In case that the file information is given as path information, a target file is read according to the path information and thereafter a string of characters is extracted as necessary and Braille conversion of the string of characters is performed. Thereafter, the process flow proceeds to step SC6, thereby finishing the guide process.

According to the embodiments of the present invention, it is not necessary to store text guide data and audio data in the electronic apparatus 100 in advance. Necessary text guide data can be read from a detachable or rewritable recording medium and transmitted to an information processing device capable of converting the data into a voice or Braille, and thus text guide data can be freely added, modified and updated.

Furthermore, it is possible to instruct the information processing device connected to the electronic apparatus 100 to read text guide data and to convert the text guide data into voice or Braille in response to a manipulation applied to the electronic apparatus 100. Accordingly, the electronic apparatus 100 can execute the guide function inexpensively.

Since text guide data is recorded in a general text file format, a special hardware configuration for guidance is not needed and load of the electronic apparatus 100 due to the guide function can be alleviated.

Furthermore, it is possible to customize contents (contents of read words), language, etc. for the user because the text guide data can be added, modified and updated.

Furthermore, text guide data is stored in a detachable or rewritable recording medium and used for guidance. Accordingly, it is possible to easily change a plurality of guides through a simple manipulation of changing the recording medium or updating the contents of the recording medium without changing the configuration of the main body of the electronic apparatus 100. For example, the user can use a guide voice in a different language. Moreover, it is possible to use text guide data generated by a third party simply by changing the recording medium.

According to the embodiments of the present invention, when guidance is performed, the information processing device can be instructed to only play a voice for guiding a function corresponding to a manipulation without executing the function. Accordingly, it is possible to prevent an unintended function from being erroneously selected and executed when a visually impaired user uses the touch panel.
Furthermore, according to the embodiments of the present invention, the user can select a guide method other than the method using a voice because contents of a guide are described in the text format. For example, if a guide is provided through Braille, the user can use the guide without interrupting playing of sound even during automatic playback.

According to the embodiments of the present invention, text guide data can be provided through a detachable recording medium or the Internet after products are shipped. Accordingly, it is not necessary to record a guide voice during development of the electronic apparatus (a period before initiation of production) and the number of development processes is reduced. Furthermore, when the manufacturer of the electronic apparatus 100 creates text guide files and distributes the text guide files to users, generation of the text guide files is started after completion of development of the electronic apparatus 100 (decision of specifications), and thus it is not necessary to re-develop the electronic apparatus 100 for specification change, improving development efficiency. Moreover, since text data is more easily generated than audio data, it is possible to create guide data inexpensively.

According to the embodiments of the present invention, since the guide function can be implemented inexpensively, it is possible to install the guide function in various products and to extend a market of products that were not (could not be) used by visually impaired users. Since products of different types can use the same text guide data if the products have the same functions, new models require little development costs.

According to the embodiments of the present invention, the electronic apparatus 100 can be released without the text guide data, and thus a user who does not need guidance can purchase the electronic apparatus 100 without bearing expenses for the guide. Furthermore, even a user who needs the guide can easily use the guide after purchasing the electronic apparatus by acquiring a recording medium (USB memory or memory card) in which the text guide data is recorded from the manufacturer of the electronic apparatus or a third party and setting the acquired recording medium in the main body of the electronic apparatus. In addition, if the user acquires the matching table of function IDs (corresponding to manipulations for implementing functions) and file names from the manufacturer of the products, the user can use a self-created text file as text guide data.

While a folder for reading text guide data TD is segmented and the same file name is allocated to files corresponding to the same functions to cope with multiple languages in the above-described embodiments, it may be possible to read text guide data TD having a file name corresponding to a set language by attaching a language code to the top or end of the file name, for example.
In the disclosed embodiments, the matching table is used for defining the correspondence between function IDs and text guide data TD. Generally, any type of matching information other than table format can be used provided that the matching information is sufficient to identify the text guide data corresponding to the function. For example, When a given function is selected, a text file name corresponding to the selected function is written into a predetermined region of RAM 7. CPU 9 refers to the predetermined region of RAM 7 to identify and locate the corresponding text file (text guide data TD).
Otherwise, the function ID or name of the function itself may be adapted to identify the text guide data. For example, when a function having function ID of 001 is selected, a text file (text guide data) having a file name containing 001 is identified as the text guide data corresponding to the selected function. Alternatively, when the selected function has a function name of "Volume", a text file having a file name containing "Volume" is identified as the corresponding text file.
In the disclosed embodiments, the text guide data TD corresponding to the selected function ID is identified by the file name of the text file containing the text guide data. Other methods may be adopted. For example, function IDs of respective functions are provisionally linked to folder names of folders (not file names) containing an text file. When a function is selected, a folder corresponding to the selected function is located by means of its function ID. Then, a text file contained in the located folder is reproduced.

The embodiments of the present invention are not limited to an electronic apparatus and can be implemented according to a commercial computer in which computer programs corresponding to the embodiments are installed. In this case, a computer program corresponding to each embodiment may be stored in a computer readable non-transitory recording medium such as a CD-ROM and provided to the user. When the computer is connected to a communication network such as a LAN, the Internet, a telephone circuit, etc., computer programs and various types of data may be provided to the user through the communication network.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

## Claims

1. An electronic apparatus having a plurality of functions, comprising:
a connecting unit that connects the electronic apparatus to an external device that has a presenting unit for presenting text information in a form desired by a user;
a function selection unit that selects a function to be executed;
a storage unit that stores matching information defining correspondence between the plurality of functions and a plurality of text files each containing text information;
a text file selection unit that selects a text file corresponding to the function selected by the function selection unit with reference to the matching information;
an acquisition unit that acquires file information from the selected text file; and
a transmission unit that transmits the acquired file information to the external device connected by the connecting unit.

2. The electronic apparatus according to claim 1, wherein the function selection unit selects a function in either of a first manipulation mode or a second manipulation mode, the electronic apparatus further comprising a control unit that executes the selected function when the function is selected by the function selection unit in the first manipulation mode and that does not execute the selected function when the function is selected by the function selection unit in the second manipulation mode.

3. The electronic apparatus according to claim 1, wherein the connecting unit connects the external device having the presenting unit for presenting the text information in a form recognizable by a visually impaired user.

4. The electronic apparatus according to claim 3, wherein the connecting unit connects the external device having the presenting unit for presenting the text information in a form of voice recognizable by a visually impaired user.

5. The electronic apparatus according to claim 3, wherein the connecting unit connects the external device having the presenting unit for presenting the text information in a form of Braille recognizable by a visually impaired user.

6. The electronic apparatus according to claim 1, wherein the acquisition unit acquires the file information from the selected text file, the file information containing text information converted into a format processable by the external device so that the presenting unit of the external device presents the text information in the desired form based on the format of the converted text information.

7. The electronic apparatus according to claim 1, wherein the acquisition unit acquires the file information from the selected text file, the acquired file information indicating a path to a source of the selected text file so that the external device accesses the source of the selected text file through the path, thereby obtaining the text information contained in the selected text file.

8. The electronic apparatus according to claim 1, further comprising an interface unit that connects an external storage storing the selected text file, wherein the acquisition unit accesses the external storage through the interface unit and acquires the file information from the text file stored in the external storage.

9. A guide system comprising an electronic apparatus having plurality of functions and an information processing device providing guide for a function to be executed by the electronic apparatus, wherein the electronic apparatus comprises:
a connecting unit that connects the electronic apparatus to the information processing device;
a function selection unit that selects a function to be executed;
a storage unit that stores matching information defining correspondence between the plurality of functions and a plurality of text files each containing text information;
a text file selection unit that selects a text file corresponding to the function selected by the function selection unit with reference to the matching information;
an acquisition unit that acquires file information from the selected text file; and
a transmission unit that transmits the acquired file information to the information processing device, and wherein the information processing device comprises:
a connecting unit that connects the information processing device to the electronic apparatus;
a receiving unit that receives the file information transmitted from the electronic apparatus; and
a presenting unit that presents text information in a desired form based on the file information of the selected text file for assisting a user of the electronic apparatus in executing the selected function thereof.

10. The guide system according to claim 9, wherein the presenting unit of the information processing unit presents the text information in a form recognizable by a visually impaired user.

11. The guide system according to claim 10, wherein the presenting unit presents the text information in a form of voice recognizable by a visually impaired user.

12. The guide system according to claim 10, wherein the presenting unit presents the text information in a form of Braille recognizable by a visually impaired user.

13. The guide system according to claim 9, wherein the acquisition unit of the electronic apparatus acquires the file information from the selected text file, the acquired file information indicating a path to a source of the selected text file, and wherein the information processing device accesses the source of the selected text file through the path, thereby obtaining the text information contained in the selected text file.

14. A guide system comprising an electronic apparatus having a plurality of functions and an information processing device providing guide for a function to be executed by the electronic apparatus, wherein the electronic apparatus comprises:
a connecting unit that connects the electronic apparatus to the information processing device;
a function selection unit that selects a function to be executed; and
a transmission unit that transmits identification information identifying the function selected by the function selection unit, and wherein the information processing device comprises:
a connecting unit that connects the information processing device to the electronic apparatus;
a receiving unit that receives the identification information of the selected function transmitted from the electronic apparatus;
a text file selection unit that selects a text file corresponding to the selected function according to the identification information thereof with reference to matching information defining correspondence between the plurality of functions and a plurality of text files each containing text information; and
a presenting unit that presents text information contained in the selected text file in a desired form for assisting a user of the electronic apparatus in executing the selected function.

15. A machine readable non-transitory medium for use in an electronic apparatus having a plurality of functions and comprising a connecting unit that connects the electronic apparatus to an external device having a presenting unit for presenting text information in a form desired by a user of the electronic apparatus, a reading unit capable of reading a recording medium in which a plurality of text files each containing text information are recorded in a rewritable manner, and a storage unit that stores matching information defining correspondence between the plurality of functions of the electronic apparatus and the plurality of text files, the machine readable non-transitory medium containing program instructions executable by the electronic apparatus to perform the steps of:
selecting a function to be executed;
selecting a text file corresponding to the selected function with reference to the matching information;
acquiring file information of the selected text file from the recording medium by means of the reading unit; and
transmitting the file information to the external device connected by the connecting unit so that the external device presents text information in a desired form based on the file information of the selected text file for assisting a user of the electronic apparatus in executing the selected function thereof.

16. A machine readable non-transitory medium used in a computer comprising a connecting unit for connecting the computer to an electronic apparatus that has a plurality of functions and that comprises a function selection unit for selecting a function to be executed in the electronic apparatus and a transmission unit for transmitting identification information that indicates the function selected by the function selection unit, the computer further comprising a storage unit for storing matching information that defines correspondence between the plurality of functions of the electronic apparatus and a plurality of text files each containing text information, and an access unit for accessing a recording medium recording the plurality of text files defined in the matching information, the machine readable non-transitory medium containing program instructions executable by the computer to perform the steps of:
receiving the identification information indicating the selected function;
selecting a text file corresponding to the function of the electronic apparatus identified by the received identification information, with reference to the matching information;
acquiring file information of the selected text file from the recording medium; and
presenting text information in a desired form based on the file information of the selected text file for assisting a user of the electronic apparatus in executing the selected function thereof.

17. A function guide method of an electronic apparatus having a plurality of functions and being connected to an external device capable of presenting text information in a form desired by a user, the electronic apparatus being capable of reading a recording medium in which a plurality of text files each containing text information are recorded in a rewritable manner and storing matching information defining correspondence between the plurality of functions of the electronic apparatus and the plurality of text files, the function guide method being performed when a function to be executed is selected and comprising the steps of:
selecting a text file corresponding to the selected function with reference to the matching information;
acquiring file information of the selected text file from the recording medium; and
transmitting the file information to the external device so that the external device presents text information in a desired form based on the file information of the selected text file for assisting a user of the electronic apparatus in executing the selected function thereof.

18. A function guide method performed by a computer connected to an electronic apparatus that has a plurality of functions and that comprises a function selection unit for selecting a function to be executed in the electronic apparatus and a transmission unit for transmitting identification information that indicates the function selected by the function selection unit, the computer having a storage unit for storing matching information that defines correspondence between the plurality of functions of the electronic apparatus and a plurality of text files each containing text information, and being capable of accessing a recording medium recording the plurality of text files defined in the matching information, the function guide method comprising the steps of:
receiving the identification information indicating the selected function from the electronic apparatus;
selecting a text file corresponding to the function of the electronic apparatus identified by the received identification information, with reference to the matching information;
acquiring file information of the selected text file from the recording medium; and
presenting text information in a desired form based on the file information of the selected text file for assisting a user of the electronic apparatus in executing the selected function thereof.
